(19) Europäisches Patentamt
European Patent Office
Office européen des brevets

(11) EP 4 531 155 A2

(12) EUROPEAN PATENT APPLICATION

(43) Date of publication:
02.04.2025 Bulletin 2025/14

(21) Application number: 24202594.8

(22) Date of filing: 25.09.2024

(51) International Patent Classification (IPC):
*H01M 10/0525* (2010.01) *H01M 10/0567* (2010.01)
*H01M 10/0569* (2010.01)

(52) Cooperative Patent Classification (CPC):
**H01M 10/0569; H01M 10/0525; H01M 10/0567;**
Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 28.09.2023 CN 202311285182

(71) Applicant: **Dongguan Amperex Technology Limited**
**Dongguan City, Guangdong Province 523000 (CN)**

(72) Inventors:
- **CUI, Hui**
  **Dongguan City, Guangdong 523000 (CN)**
- **YANG, Shuaile**
  **Dongguan City, Guangdong 523000 (CN)**
- **CAI, Xin**
  **Dongguan City, Guangdong 523000 (CN)**
- **TANG, Chao**
  **Dongguan City, Guangdong 523000 (CN)**

(74) Representative: **Icosa**
**83 avenue Denfert-Rochereau**
**75014 Paris (FR)**

# (54) ELECTROCHEMICAL APPARATUS AND ELECTRONIC APPARATUS

(57) An electrochemical apparatus includes an electrolyte solution comprising a compound of Formula I

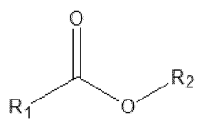

and a compound of Formula II

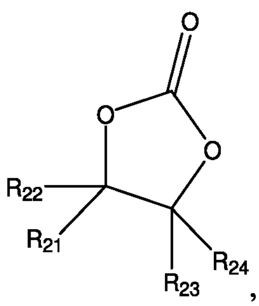

,

wherein $R_1$ is halogenated $C_1$ to $C_{10}$ alkyl and $R_2$ is $C_1$ to $C_{10}$ alkyl; and $R_{21}$, $R_{22}$, $R_{23}$, and $R_{24}$ are each independently fluorine or unsubstituted or halogenated $C_1$ to $C_3$ alkyl, and at least one of $R_{21}$, $R_{22}$, $R_{23}$, and $R_{24}$ contains fluorine.



Processed by Luminess, 75001 PARIS (FR)

## Description

### TECHNICAL FIELD

This application relates to the field of energy storage, and in particular, to an electrolyte solution, an electrochemical apparatus using the electrolyte solution and an electronic apparatus.

### BACKGROUND

Electrochemical apparatuses (e.g., lithium-ion batteries) are widely used in the fields such as portable electronic products, electric means of transport, aerospace, and energy reserves by virtue of advantages such as a high energy density, good cycle performance, safety, environmental friendliness, and no memory effect. With increasingly wider application of the lithium-ion batteries, higher requirements are imposed on the energy density of the lithium-ion batteries. The energy density can be improved by increasing the operating voltage of the lithium-ion batteries. However, with the rise of positive electrode potentials, an electrolyte solution becomes more instable at a positive electrode interface, and the intermittent cycle performance of the batteries gets poorer, which restricts the application of the lithium-ion batteries.

In view of this, it is indeed necessary to provide an electrolyte solution which can improve the intermittent cycle performance of the electrochemical apparatus under a high temperature.

### SUMMARY

This application aims to solve, at least to some extent, at least one of the problems in the related art by providing an electrochemical apparatus and an electronic apparatus.

According to an aspect of this application, this application provides an electrochemical apparatus. The electrochemical apparatus comprises a positive electrode, a negative electrode, a separator and an electrolyte solution. The electrolyte solution comprises a compound of Formula I and a compound of Formula II:

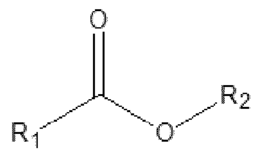

compound of Formula I,
$_1$ is halogenated $C_1$ to $C_{10}$ alkyl, and $R_2$ is $C_1$ to $C_{10}$ alkyl; and

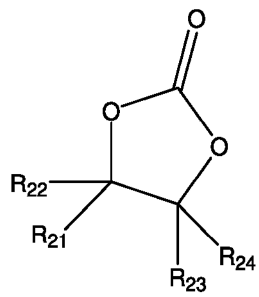

compound of Formula II,
wherein $R_{21}$, $R_{22}$, $R_{23}$ and $R_{24}$ are each independently fluorine, unsubstituted or halogenated $C_1$ to C3 alkyl, and at least one of $R_{21}$, $R_{22}$, $R_{23}$ and $R_{24}$ comprises fluorine.

According to embodiments of this application, $R_1$ is the halogenated $C_1$ to $C_6$ alkyl and comprises at least one fluorine, and $R_2$ is $C_1$ to $C_5$ alkyl. The intermittent cycle performance of an electrochemical apparatus at a high temperature can be improved by selecting $R_1$ and $R_2$ that meet the above ranges.

According to embodiments of this application, $R_1$ is halogenated $C_1$ to $C_4$ alkyl and comprises at least one fluorine, and $R_2$ is $C_1$ to $C_3$ alkyl. The intermittent cycle performance of the electrochemical apparatus at a high temperature can be further improved by selecting $R_1$ and $R_2$ that meet the above ranges.

According to embodiments of this application, the compound of Formula I is at least one selected from the following compounds:

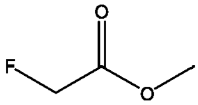 I-1, 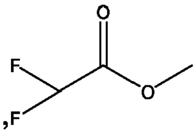 I-2, 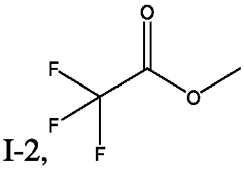 I-3,

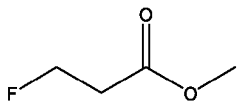 I-4, 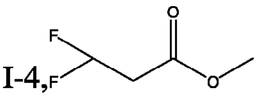 I-5, 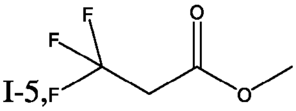 I-6,

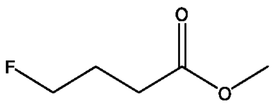 I-7, 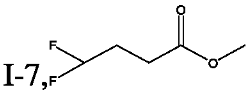 I-8, 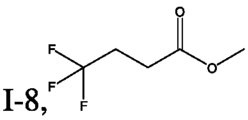 I-9,

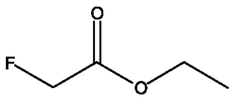 I-10, 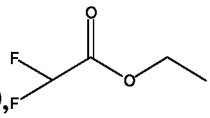 I-11, 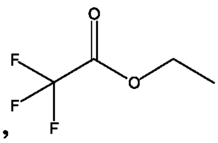 I-12,

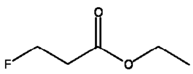 I-13, 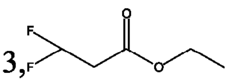 I-14, 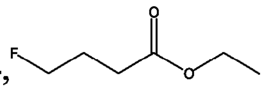 I-15,

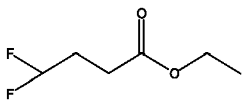 I-16, 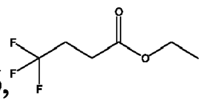 I-17, 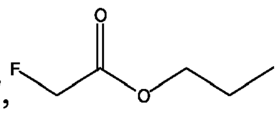 I-18,

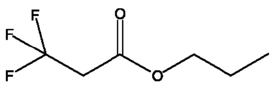 I-19, 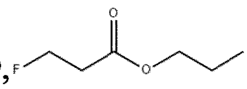 I-20,

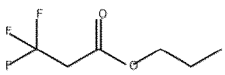 I-21, or 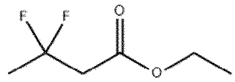 I-22.

The intermittent cycle performance of the electrochemical apparatus at a high temperature can be improved by selecting at least one of the foregoing compounds of Formula I.

According to embodiments of this application, based on a mass of the electrolyte solution, a weight percentage of the Compound of Formula I ranges from 10% to 80%. By adjusting the weight percentage of the Compound of Formula I to be within the above range, the intermittent cycle performance of the electrochemical apparatus under a high temperature can be further improved.

According to embodiments of this application, based on the mass of the electrolyte solution, the weight percentage of the compound of Formula I ranges from 22% to 73%. The intermittent cycle performance of the electrochemical apparatus at the high temperature can be further improved by adjusting the weight percentage of the compound of Formula I to be within the above range.

According to embodiments of this application, the weight percentage of the compound of Formula I ranges from 45% to 63% based on the mass of the electrolyte solution. By adjusting the weight percentage of the compound of Formula I to be within the above range, an electrode protection film with better toughness can be formed, and the intermittent cycle performance of the electrochemical apparatus at the high temperature can be further improved.

According to embodiments of this application, the Compound of Formula II is at least one selected from the following compounds:

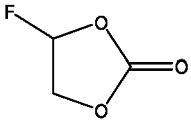 II-1, 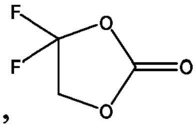 II-2, 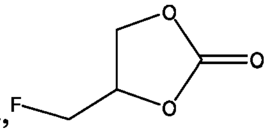 II-3,

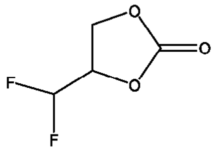 II-4, 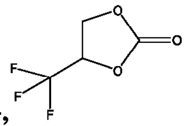 II-5, 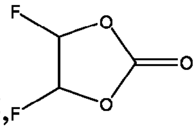 II-6,

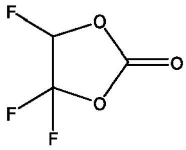 II-7, 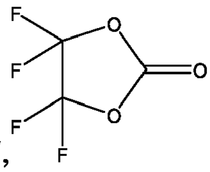 II-8, 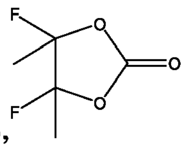 II-9,

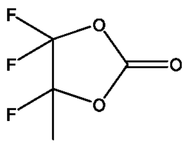 II-10, 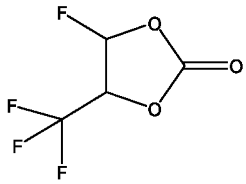 II-11, or 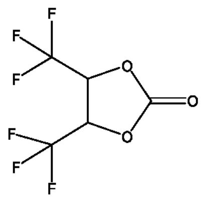 II-12.

The intermittent cycle performance of the electrochemical apparatus at the high temperature can be further improved by selecting at least one of the foregoing compounds of Formula II.

According to embodiments of this application, based on the mass of the electrolyte solution, the weight percentage of the Compound of Formula II ranges from 5% to 25%. By adjusting the weight percentage of the Compound of Formula II to be within the above range, the intermittent cycle performance of the electrochemical apparatus under a high temperature can be further improved.

According to embodiments of this application, based on the mass of the electrolyte solution, the weight percentage of the compound of Formula II ranges from 8% to 15%. By adjusting the weight percentage of the compound of Formula II to be within the above range, the compound of Formula I and the compound of Formula II can be fully coordinated with each other, an electrode protection film with higher strength is generated, and the intermittent cycle performance of the electrochemical apparatus at the high temperature can be further improved.

According to embodiments of this application, based on the mass of the electrolyte solution, a ratio of a weight percentage of the compound of Formula I to a weight percentage of the compound of Formula II ranges from 2.05 to 16. By adjusting the ratio of the weight percentage of the compound of Formula I to the weight percentage of the compound of Formula II to be within the above range, film forming evenness of an electrode protection film can be improved, and intermittent cycle performance of the electrochemical apparatus at the high temperature can be improved.

According to embodiments of this application, based on the mass of the electrolyte solution, the ratio of the weight percentage of the compound of Formula I to the weight percentage of the compound of Formula II ranges from 5 to 9.2. By adjusting the ratio of the weight percentage of the compound of Formula I to the weight percentage of the compound of Formula II to be within the above range, the intermittent cycle performance of the electrochemical apparatus at the high temperature can be further improved.

According to embodiments of this application, based on the mass of the electrolyte solution, a sum of a weight percentage of the compound of Formula I and a weight percentage of the compound of Formula II ranges from 18% to 87.5%. The intermittent cycle performance of an electrochemical apparatus at a high temperature can be further improved by adjusting the sum of the weight percentage of the compound of Formula I and the weight percentage of the compound of Formula II to be within the above range.

According to embodiments of this application, based on the mass of the electrolyte solution, a sum of the weight percentage of the compound of Formula I and the weight percentage of the compound of Formula II ranges from 53% to 81%. By adjusting the sum of the weight percentage of the compound of Formula I and the weight percentage of the compound of Formula II to be within the above range, film forming strength of an electrode protection film can be improved, and the intermittent cycle performance of the electrochemical apparatus at the high temperature is further improved.

According to embodiments of this application, the electrolyte solution further includes a first nitrile compound, and

the first nitrile compound comprises at least one selected from the group consisting of succinonitrile, glutaronitrile, adiponitrile, pimelic dinitrile, suberonitrile, 2-pentenenitrile, 1,4-dicyano-2-butene, and ethylene glycol bis(propionitrile) ether. The intermittent cycle performance of the electrochemical apparatus at the high temperature can be further improved when at least one of the foregoing first nitrile compounds is included.

According to embodiments of this application, based on the mass of the electrolyte solution, a weight percentage of the first nitrile compound ranges from 0.8 to 4.8. By adjusting the weight percentage of the first nitrile compound to be within the above range, film forming strength of an electrode protection film can be improved, and the intermittent cycle performance of the electrochemical apparatus at the high temperature can be improved.

According to embodiments of this application, based on the mass of the electrolyte solution, the weight percentage of the first nitrile compound ranges from 1.1 to 3.2. By adjusting the weight percentage of the first nitrile compound to be within the above range, the film forming strength of the electrode protection film can be improved, and the intermittent cycle performance of the electrochemical apparatus at the high temperature is further improved.

According to embodiments of this application, the electrolyte solution further includes ethylene carbonate, propylene carbonate, and succinonitrile. The intermittent cycle performance of the electrochemical apparatus at the high temperature can be further improved when the ethylene carbonate, the propylene carbonate, and the succinonitrile are included.

According to embodiments of this application, the electrolyte solution further includes ethylene carbonate, propylene carbonate, and adiponitrile. The intermittent cycle performance of the electrochemical apparatus at the high temperature can be further improved when the ethylene carbonate, the propylene carbonate, and the adiponitrile are included.

According to embodiments of this application, the electrolyte solution further includes ethylene carbonate, propylene carbonate, ethylene glycol bis(propionitrile) ether, and adiponitrile. The intermittent cycle performance of the electrochemical apparatus at the high temperature can be further improved when the ethylene carbonate, the propylene carbonate, the ethylene glycol bis(propionitrile) ether, and the adiponitrile are included.

According to embodiments of this application, based on the mass of the electrolyte solution, a ratio of a weight percentage of the compound of Formula I to a weight percentage of the first nitrile compound ranges from 5 to 70. The intermittent cycle performance of the electrochemical apparatus at the high temperature can be further improved by adjusting the ratio of the weight percentage of the compound of Formula I to the weight percentage of the first nitrile compound to be within the above range.

According to embodiments of this application, based on the mass of the electrolyte solution, the ratio of the weight percentage of the compound of Formula I to the weight percentage of the first nitrile compound ranges from 13.1 to 31.5. The intermittent cycle performance of the electrochemical apparatus at the high temperature can be further more improved by adjusting the ratio of the weight percentage of the compound of Formula I to the weight percentage of the first nitrile compound to be within the above range.

According to embodiments of this application, the electrolyte solution further includes a second nitrile compound, and the second nitrile compound is at least one selected from the following compounds:

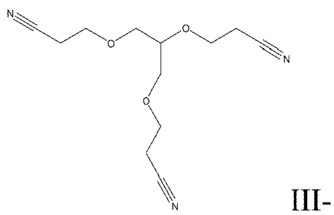
III-1,

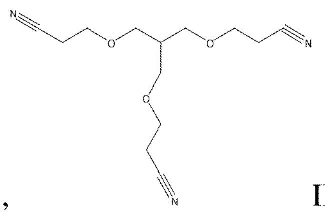
III-2,

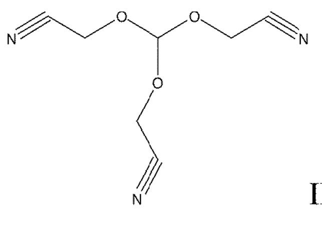
III-3,

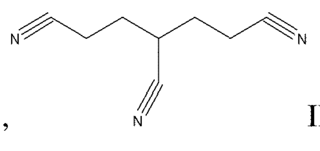
III-4,

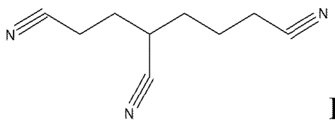 III-5, 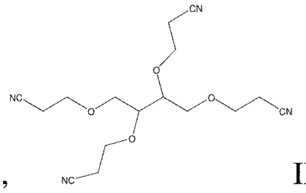 III-6,

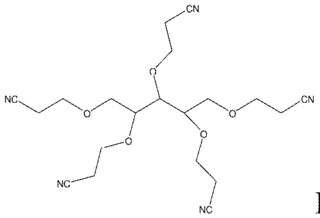 III-7, 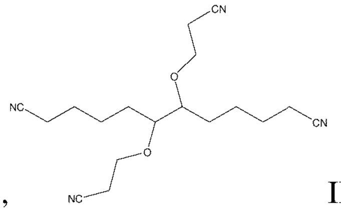 III-8,

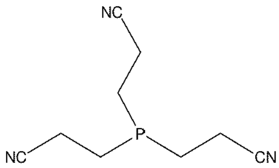 III-9, 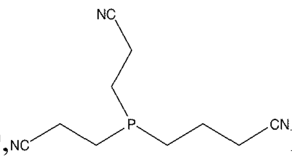 III-10,

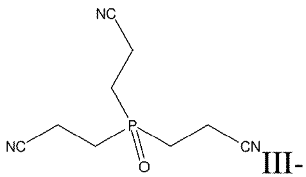 III-11, 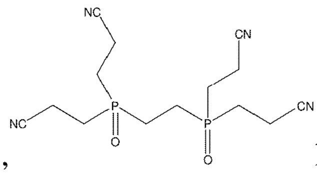 III-12,

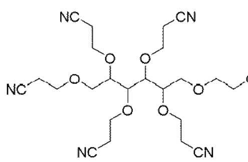 III-13, 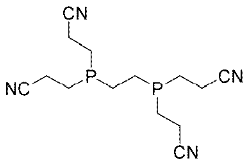 III-14,

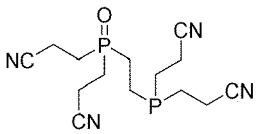 III-15, 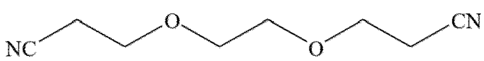 III-16,

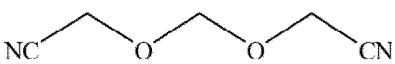 III-17, 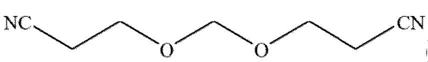 III-18

or

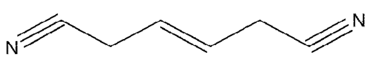

111-19. The intermittent cycle performance of the electrochemical apparatus at the high temperature can be further improved when the foregoing second nitrile compound is included.

According to embodiments of this application, based on the mass of the electrolyte solution, a weight percentage of the second nitrile compound ranges from 0.8% to 6% The intermittent cycle performance of the electrochemical apparatus at the high temperature can be further improved by adjusting the weight percentage of the second nitrile compound to be within the above range.

According to embodiments of this application, based on the mass of the electrolyte solution, the weight

percentage of the second nitrile compound ranges from 1.1% to 3.8% The intermittent cycle performance of the electrochemical apparatus at the high temperature can be further improved by adjusting the weight percentage of the second nitrile compound to be within the above range.

According to embodiments of this application, the electrolyte solution further includes a compound III-5:

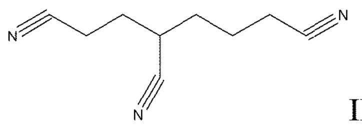

III-5,

a ratio of a weight percentage of the compound of Formula II to a weight percentage of the compound III-5 ranges from 2.5 to 20 based on the mass of the electrolyte solution. The intermittent cycle performance of the electrochemical apparatus at the high temperature can be further improved by including the compound III-5 and by adjusting the ratio of the weight percentage of the compound of Formula II to the weight percentage of the compound III-5 to be within the above range.

According to embodiments of this application, the electrolyte solution further includes ethylene carbonate, propylene carbonate, succinonitrile, and a compound III-5

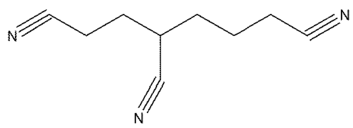

.

The intermittent cycle performance of the electrochemical apparatus at the high temperature can be further improved when the foregoing substances are included.

According to embodiments of this application, the electrolyte solution includes ethylene carbonate, propylene carbonate, diethyl carbonate, succinonitrile, and a compound III-5

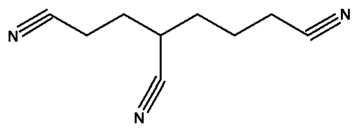

.

The intermittent cycle performance of the electrochemical apparatus at the high temperature can be further improved when the foregoing substances are included.

According to embodiments of this application, the electrolyte solution includes ethylene carbonate, propylene carbonate, succinonitrile, adiponitrile, and a compound III-5

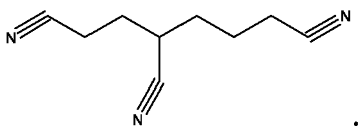

.

The intermittent cycle performance of the electrochemical apparatus at the high temperature can be further improved when the foregoing substances are included.

According to embodiments of this application, the positive electrode includes a positive active material, and the positive active material includes at least one of lithium cobalt oxide, lithium nickel cobalt manganate or lithium nickel manganese oxide. By selecting the above substances as the positive active material, the intermittent cycle performance of the electrochemical apparatus under a high temperature can be further improved.

According to embodiments of this application, the positive active material includes the lithium cobalt oxide; and a particle size of the positive active material satisfies: $Dv_{50}$ ranges from 10 $\mu$m to 25 $\mu$m and $Dv_{10}$ ranges from 2 $\mu$m to 10 $\mu$m. The intermittent cycle performance of the electrochemical apparatus at the high temperature can be further improved by adjusting the particle size of the positive active material to be within the above ranges.

According to embodiments of this application, the positive active material includes the lithium cobalt oxide; and the particle size of the positive active material satisfies: $Dv_{50}$ ranges from 13.1 $\mu$m to 16.1 $\mu$m and $Dv_{10}$ ranges from 3.2 $\mu$m to 6.2 $\mu$m. The intermittent cycle performance of the electrochemical apparatus at the high temperature can be further more improved by adjusting the particle size of the positive active material to be within the above ranges.

According to another aspect of this application, this application provides an electronic apparatus, including the electrochemical apparatus described in this application.

The intermittent cycle performance of the electrochemical apparatus at the high temperature can be improved by using an electrolyte solution including a compound of Formula I and a compound of Formula II described in this application.

The additional aspects and advantages of this application may be partially described and shown in the subsequent description or illustrated by the implementation of the embodiments of this application.

## DETAILED DESCRIPTION OF EMBODIMENTS

Embodiments of this application will be described in detail below. No embodiment of this application is to be construed as a limitation on this application.

In specific implementations and claims, a list of items linked by the terms such as "at least one of" may mean any combination of the listed items. For example, if items A and B are listed, the phrase "at least one of A and B" means: A alone; B alone; or both A and B. In another example, if items A, B, and C are listed, the phrase "at least one of A, B, and C" means: A alone; B alone; C alone; A and B (excluding C); A and C (excluding B); B and C (excluding A); or all of A, B, and C. The item A may include a single element or a plurality of elements. The item B may include a single element or a plurality of elements. The item C may include a single element or a plurality of elements.

As used herein, the term "alkyl" is expected to be a linear saturated hydrocarbon structure having 1 to 20 carbon atoms. "Alkyl" is also expected to be a branched or cyclic hydrocarbon structure having 3-20 carbon atoms. When an alkyl having a specific carbon number is designated, all geometric isomers having that carbon number are expected to be covered. Therefore, e.g., "butyl" is meant to include n-butyl, sec-butyl, isobutyl, tert-butyl, and cyclobutyl; "propyl" includes n-propyl, isopropyl, and cyclopropyl. Examples of alkyl include, but are not limited to, methyl, ethyl, n-propyl, isopropyl, cyclopropyl, n-butyl, isobutyl, sec-butyl, tert-butyl, cyclobutyl, n-pentyl, isopentyl, neopentyl, cyclopentyl, methylcyclopentyl, ethylcyclopentyl, n-hexyl, isohexyl, cyclohexyl, n-heptyl, octyl, cyclopropyl, cyclobutyl, norbornyl, and the like.

As used herein, the term "halogen" may be F, Cl, Br, or I.

Electrochemical apparatuses (e.g., lithium-ion batteries) are widely used in various fields by virtue of their superior performance. In the meanwhile, higher requirements are imposed on their performance such as the energy density and cycle performance. The energy density can be improved by increasing the operating voltage of the lithium-ion batteries. However, with the rise of positive electrode potentials, the electrolyte solution becomes more instable at a positive electrode interface, leading to poorer intermittent cycle performance of the electrochemical apparatuses. This problem is especially noticeable in the context of a high temperature.

To solve the above problem, this application provides an electrochemical apparatus comprising a positive electrode, a negative electrode, a separator and an electrolyte solution. The electrolyte solution including a Compound of Formula I and a Compound of Formula II:

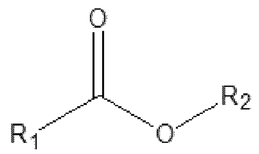
Formula I,

wherein $R_1$ is halogenated $C_1$ to $C_{10}$ alkyl, and $R_2$ is $C_1$ to $C_{10}$ alkyl; and the compound of Formula II has Formula II:

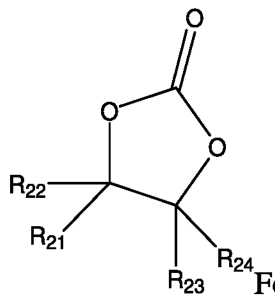
Formula II,

wherein $R_{21}$, $R_{22}$, $R_{23}$ and $R_{24}$ are each independently fluorine, unsubstituted or halogenated $C_1$ to C3 alkyl, and at least one of $R_{21}$, $R_{22}$, $R_{23}$ and $R_{24}$ includes fluorine.

Both the compound of Formula I and the compound of Formula II have high oxidation resistance, and molecular configurations of the compound of Formula I and the compound of Formula II are conducive to coordination between the two compounds, to generate a dense and stable electrode protection film. This significantly reduces interfacial reaction

activity, and reduces consumption of active substances, so that the intermittent cycle performance of an electrochemical apparatus at a high temperature can be significantly improved.

In some embodiments, $R_1$ is halogenated $C_1$ to $C_6$ alkyl and includes at least one fluorine, and $R_2$ is $C_1$ to $C_5$ alkyl. The intermittent cycle performance of the electrochemical apparatus at the high temperature can be further improved by selecting $R_1$ and $R_2$ that meet the above ranges.

In some embodiments, $R_1$ is halogenated $C_1$ to $C_4$ alkyl and includes at least one fluorine, and $R_2$ is $C_1$ to $C_3$ alkyl. The intermittent cycle performance of the electrochemical apparatus at the high temperature can be further more improved by selecting $R_1$ and $R_2$ that meet the above ranges.

In some embodiments, the Compound of Formula I is at least one selected from the following compounds:

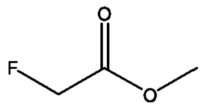 I-1, 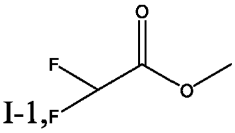 I-2, 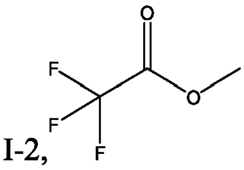 I-3,

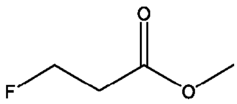 I-4, 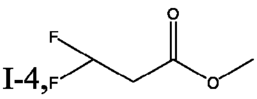 I-5, 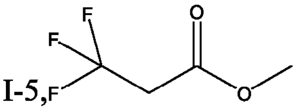 I-6,

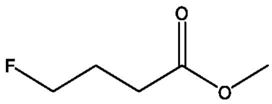 I-7, 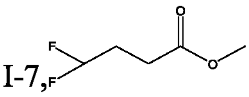 I-8, 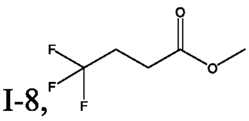 I-9,

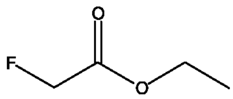 I-10, 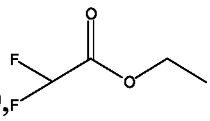 I-11, 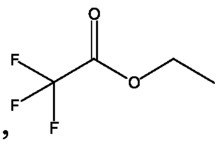 I-12,

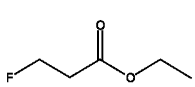 I-13, 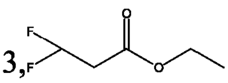 I-14, 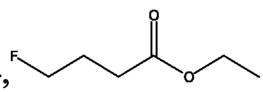 I-15,

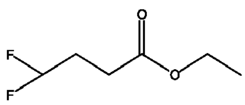 I-16, 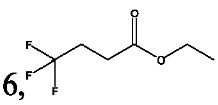 I-17, 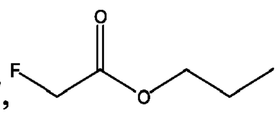 I-18,

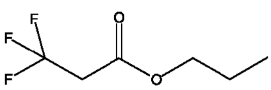 I-19, 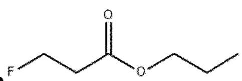 I-20,

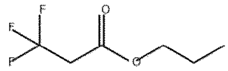 I-21, or 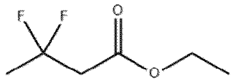 I-22.

The intermittent cycle performance of the electrochemical apparatus at the high temperature can be further improved by selecting at least one of the foregoing compounds of Formula I.

In some embodiments, a weight percentage of the compound of Formula I ranges from 10% to 80% based on mass of the electrolyte solution. In some embodiments, the weight percentage of the compound of Formula I ranges from 22% to 73% based on the mass of the electrolyte solution. In some embodiments, the weight percentage of the compound of Formula I ranges from 45% to 63% based on the mass of the electrolyte solution. In some embodiments, based on the mass of the electrolyte solution, the weight percentage of the compound of Formula I is 10%, 15%, 20%, 22%, 25%, 30%, 35%, 40%, 45%, 50%, 55%, 60%, 63%, 65%, 70%, 73%, 75%, 80%, or a value within a range formed by any two of the

foregoing values. By adjusting the weight percentage of the compound of Formula I to be within the above range, the intermittent cycle performance of the electrochemical apparatus at the high temperature can be further improved.

In some embodiments, the Compound of Formula II is at least one selected from the following compounds:

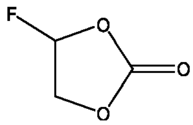 II-1, 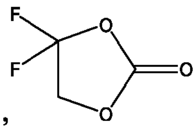 II-2, 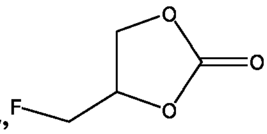 II-3,

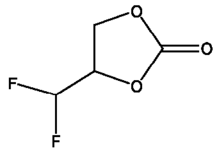 II-4, 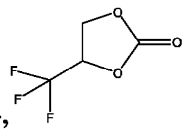 II-5, 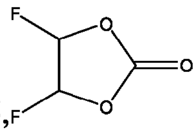 II-6,

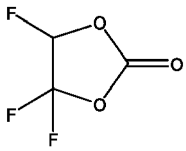 II-7, 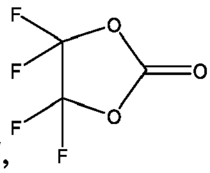 II-8, 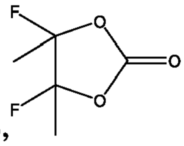 II-9,

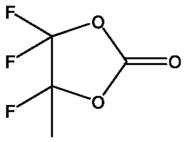 II-10, 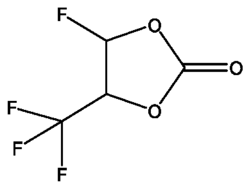 II-11, or 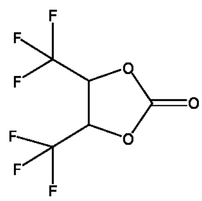 II-12.

The intermittent cycle performance of the electrochemical apparatus at the high temperature can be further improved by selecting at least one of the foregoing compounds of Formula II.

In some embodiments, a weight percentage of the compound of Formula II ranges from 5% to 25% based on mass of the electrolyte solution. In some embodiments, the weight percentage of the compound of Formula II ranges from 10% to 20% based on the mass of the electrolyte solution. In some embodiments, the weight percentage of the compound of Formula II ranges from 8% to 15% based on the mass of the electrolyte solution. In some embodiments, based on the mass of the electrolyte solution, the weight percentage of the compound of Formula II is 5%, 8%, 10%, 15%, 20%, 25%, or a value within a range formed by any two of the foregoing values. By adjusting the weight percentage of the compound of Formula II to be within the above range, the intermittent cycle performance of the electrochemical apparatus at the high temperature can be further improved.

In some embodiments, based on the mass of the electrolyte solution, a ratio of a weight percentage of the compound of Formula I to a weight percentage of the compound of Formula II ranges from 2.05 to 16. In some embodiments, based on the mass of the electrolyte solution, the ratio of the weight percentage of the compound of Formula I to the weight percentage of the compound of Formula II ranges from 3 to 15. In some embodiments, based on the mass of the electrolyte solution, the ratio of the weight percentage of the compound of Formula I to the weight percentage of the compound of Formula II ranges from 5 to 9.2. In some embodiments, based on the mass of the electrolyte solution, the ratio of the weight percentage of the compound of Formula I to the weight percentage of the compound of Formula II is 2.05, 3, 4, 5, 6, 7, 8, 9, 9.2, 10, 11, 12, 13, 14, 15, 16, or a value within a range formed by any two of the foregoing values. The intermittent cycle performance of the electrochemical apparatus at the high temperature can be further more improved by adjusting the ratio of the weight percentage of the compound of Formula I to the weight percentage of the compound of Formula II to be within the above range.

In some embodiments, based on the mass of the electrolyte solution, a sum of a weight percentage of the compound of Formula I and a weight percentage of the compound of Formula II ranges from 18% to 87.5%. In some embodiments, the sum of the weight percentage of the compound of Formula I and the weight percentage of the compound of Formula II ranges from 53% to 81%. In some embodiments, the sum of the weight percentage of the compound of Formula I and the weight percentage of the compound of Formula II 18%, 20%, 25%, 35%, 40%, 45%, 48%, 50%, 53%, 55%, 60%, 65%, 70%, 75%, 80%, 81%, 85%, 87.5%, or a value within a range formed by any two of the foregoing values. The intermittent cycle performance of the electrochemical apparatus at the high temperature can be further improved by

adjusting the sum of the weight percentage of the compound of Formula I and the weight percentage of the compound of Formula II to be within the above range.

In some embodiments, the electrolyte solution further includes a first nitrile compound, and the first nitrile compound comprises at least one selected from the group consisting of succinonitrile, glutaronitrile, adiponitrile, pimelic dinitrile, suberonitrile, 2-pentenenitrile, 1,4-dicyano-2-butene, or ethylene glycol bis(propionitrile) ether. The intermittent cycle performance of the electrochemical apparatus at the high temperature can be further improved when at least one of the foregoing first nitrile compounds is included.

In some embodiments, the electrolyte solution further includes the first nitrile compound. Based on the mass of the electrolyte solution, a weight percentage of the first nitrile compound ranges from 0.8 to 4.8. In some embodiments, based on the mass of the electrolyte solution, the weight percentage of the first nitrile compound ranges from 1.1 to 3.2. In some embodiments, the weight percentage of the first nitrile compound is 0.8, 0.9, 1, 1.1, 1.2, 1.5, 1.6, 2, 2.6, 2.9, 3.2, 3.6, 3.8, 4.2, 4.4, 4.6, 4.8, or a value within a range formed by any two of the foregoing values. The intermittent cycle performance of the electrochemical apparatus at the high temperature can be further improved by adjusting the weight percentage of the first nitrile compound to be within the above range.

In some embodiments, the electrolyte solution includes ethylene carbonate, propylene carbonate, and succinonitrile. The intermittent cycle performance of the electrochemical apparatus at the high temperature can be further improved when the ethylene carbonate, the propylene carbonate, and the succinonitrile are included.

In some embodiments, the electrolyte solution further includes ethylene carbonate, propylene carbonate, and adiponitrile. The intermittent cycle performance of the electrochemical apparatus at the high temperature can be further improved when the ethylene carbonate, the propylene carbonate, and the adiponitrile are included.

In some embodiments, the electrolyte solution further includes ethylene carbonate, propylene carbonate, ethylene glycol bis(propionitrile)ether, and adiponitrile. The intermittent cycle performance of the electrochemical apparatus at the high temperature can be further improved when the ethylene carbonate, the propylene carbonate, the ethylene glycol bis(propionitrile) ether, and the adiponitrile are included.

In some embodiments, based on the mass of the electrolyte solution, a ratio of a weight percentage of the compound of Formula I to a weight percentage of the first nitrile compound ranges from 5 to 70. In some embodiments, based on the mass of the electrolyte solution, the ratio of the weight percentage of the compound of Formula I to the weight percentage of the first nitrile compound ranges from 10 to 50. In some embodiments, based on the mass of the electrolyte solution, the ratio of the weight percentage of the compound of Formula I to the weight percentage of the first nitrile compound ranges from 13.1 to 31.5. In some embodiments, based on the mass of the electrolyte solution, the ratio of the weight percentage of the compound of Formula I to the weight percentage of the first nitrile compound is 5, 10, 13.1, 15, 20, 21, 25, 30, 31.5, 35, 40, 45, 50, 55, 60, 65, 70, or a value within a range formed by any two of the foregoing values.

In some embodiments, the electrolyte solution further includes a second nitrile compound, and the second nitrile compound is at least one selected from the following structures:

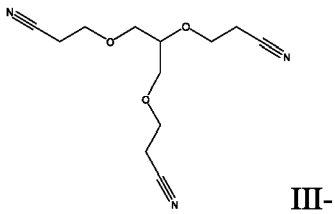 III-1, 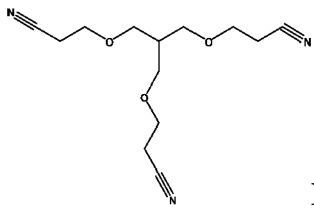 III-2,

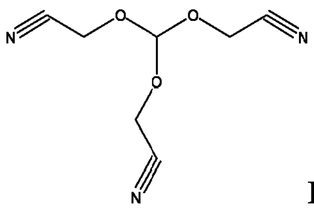 III-3, 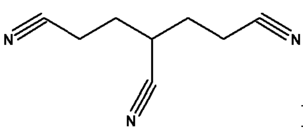 III-4,

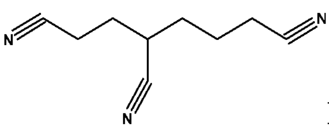 III-5, 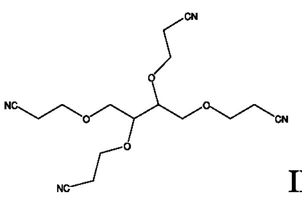 III-6,

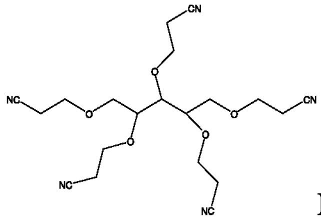 III-7, 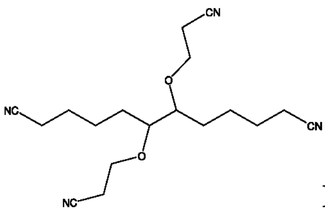 III-8,

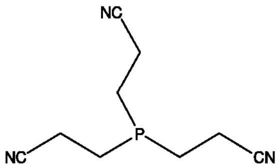 III-9, 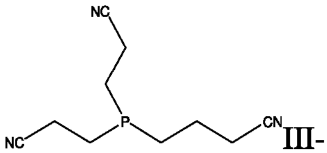 III-10,

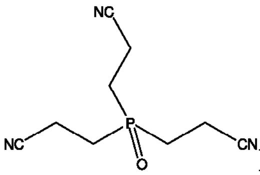 III-11, 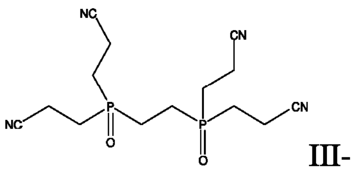 III-12,

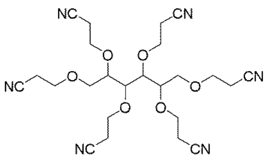 III-13, 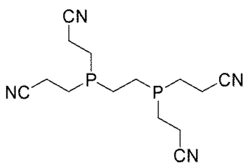 III-14,

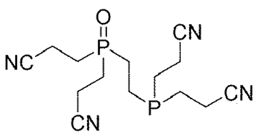 III-15, 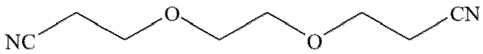 III-16,

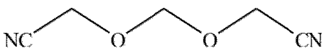 III-17, 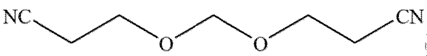 III-18,

or

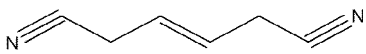

I III-19. The intermittent cycle performance of the electrochemical apparatus at the high temperature can be further improved when the foregoing second nitrile compound is included.

In some embodiments, based on the mass of the electrolyte solution, a weight percentage of the second nitrile compound ranges from 0.8% to 6% In some embodiments, based on the mass of the electrolyte solution, the weight percentage of the second nitrile compound ranges from 1.1% to 3.8% In some embodiments, based on the mass of the electrolyte solution, the weight percentage of the second nitrile compound is 0.8%, 1%, 1.1 %, 2%, 3%, 3.8%, 4%, 5%, 6%, or a value within a range formed by any two of the foregoing values. The intermittent cycle performance of the electrochemical apparatus at the high temperature can be further improved by adjusting the weight percentage of the second nitrile compound to be within the above range.

In some embodiments, the electrolyte solution further includes a compound III-5:

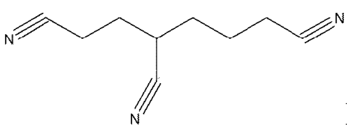

III-5,

a ratio of a weight percentage of the compound of Formula II to a weight percentage of the compound III-5 ranges from 2.5 to 20 based on the mass of the electrolyte solution. In some embodiments, based on the mass of the electrolyte solution, the ratio of the weight percentage of the compound of Formula II to the weight percentage of the compound III-5 ranges from 5 to 10. In some embodiments, based on the mass of the electrolyte solution, the ratio of the weight percentage of the compound of Formula II to the weight percentage of the compound III-5 is 2.5, 3, 5, 8, 10, 12, 15, 18, 20, or a value within a range formed by any two of the foregoing values. The intermittent cycle performance of the electrochemical apparatus at the high temperature can be further improved by including the compound III-5 and by adjusting the ratio of the weight percentage of the compound of Formula II to the weight percentage of the compound III-5 to be within the above range.

In some embodiments, the electrolyte solution includes ethylene carbonate, propylene carbonate, succinonitrile, and a compound III-5

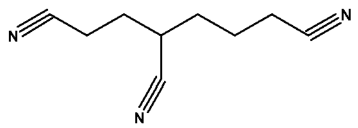.

The intermittent cycle performance of the electrochemical apparatus at the high temperature can be further improved when the foregoing substances are included.

In some embodiments, the electrolyte solution includes ethylene carbonate, propylene carbonate, diethyl carbonate, succinonitrile, and a compound III-5

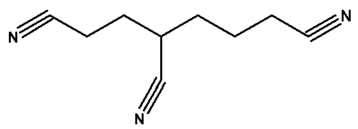.

The intermittent cycle performance of the electrochemical apparatus at the high temperature can be further improved when the foregoing substances are included.

In some embodiments, the electrolyte solution includes ethylene carbonate, propylene carbonate, succinonitrile, adiponitrile, and a compound III-5

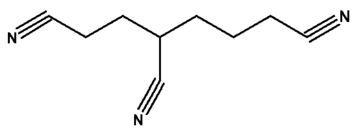.

The intermittent cycle performance of the electrochemical apparatus at the high temperature can be further improved when the foregoing substances are included.

In some embodiments, the electrolyte solution may further include another compound, and the another compound may be selected from non-fluorocarbonate, non-fluorocarboxylate, or a combination thereof. In some embodiments, the non-fluorocarbonate includes at least one of ethylene carbonate (EC), propylene carbonate (PC), diethyl carbonate (DEC), ethyl methyl carbonate (EMC), or dimethyl carbonate (DMC). In some embodiments, the non-fluorocarboxylate includes at least one of ethyl formate, propyl formate, butyl formate, isobutyl formate, methyl acetate, ethyl acetate, propyl acetate, methyl propionate, ethyl propionate (EP), or propyl propionate (PP). In some embodiments, the electrolyte solution further includes a lithium salt. In some embodiments, the lithium salt includes, but is not limited to, lithium hexafluorophosphate ($LiPF_6$). In some embodiments, a concentration of the lithium salt in the electrolyte solution is 0.5 to 3 mol/L.

In some embodiments, the positive electrode includes a positive current collector and a positive active material layer located on one side or two sides of the positive current collector, and the positive active material layer includes a positive active material.

In some embodiments, the positive active material includes at least one of lithium cobalt oxide, lithium nickel cobalt manganate NMC, or lithium nickel manganese oxide. By selecting the above substances as the positive active material, the intermittent cycle performance of the electrochemical apparatus at the high temperature can be further improved.

In some embodiments, the positive active material includes the lithium cobalt oxide; and a particle size of the positive active material satisfies: $Dv_{50}$ ranges from 10 μm to 25 μm and $Dv_{10}$ ranges from 2 μm to 10 μm. In some embodiments, the particle size of the positive active material satisfies: $Dv_{50}$ ranges from 13.1 μm to 16.1 μm and $Dv_{10}$ ranges from 3.2 μm to 6.2 μm. The intermittent cycle performance of the electrochemical apparatus at the high

temperature can be further improved by adjusting the particle size of the positive active material to be within the above range.

In some embodiments, $Dv_{50}$ is 10 μm, 11 μm, 12 μm, 13 μm, 13.1 μm, 14 μm, 15 μm, 16 μm, 16.1 μm, 17 μm, 18 μm, 19 μm, 20 μm, 21 μm, 22 μm, 23 μm, 24 μm, 25 μm, or a value within a range formed by any two of the foregoing values. The intermittent cycle performance of the electrochemical apparatus at the high temperature can be further improved by adjusting the particle size of the positive active material to be within the above range.

In some embodiments, $Dv_{10}$ is 2 μm, 3 μm, 3.2 μm, 4 μm, 5 μm, 6 μm, 6.2 μm, 7 μm, 8 μm, 9 μm, or a value within a range formed by any two of the foregoing values. The intermittent cycle performance of the electrochemical apparatus at the high temperature can be further improved by adjusting the particle size of the positive active material to be within the above range.

In some embodiments, the positive current collector may adopt aluminum (Al) foil. Other positive current collectors commonly used in the art may also be used. In some embodiments, a thickness of the positive current collector may be 1 μm to 200 μm.

In some embodiments, the positive active material layer may further include a binder and a conductive agent. In some embodiments, the binder in the positive active material layer may include at least one of polyvinylidene fluoride, a vinylidene fluoride-hexafluoropropylene copolymer, a styrene-acrylate copolymer, a styrene-butadiene copolymer, polyamide, polyacrylonitrile, polyacrylate ester, polyacrylic acid, polyacrylate salt, sodium carboxymethyl cellulose, polyvinyl acetate, polyvinylpyrrolidone, polyvinyl ether, polytetrafluoroethylene, or polyhexafluoropropylene. In some embodiments, the conductive agent in the positive active material layer may include at least one of conductive carbon black, Ketjen black, graphene, carbon nanotubes, or carbon fibers. In some embodiments, mass ratio of the positive active material to the conductive agent to the binder in the positive active material layer may be (91 to 99): (0.5 to 3): (0.5 to 6). It should be understood that the foregoing is merely exemplary and the positive active material layer may be of any other suitable material, thickness and mass ratio.

In some embodiments, the negative electrode plate may include a negative current collector and a negative active material layer disposed on the negative current collector. In some embodiments, the negative current collector may adopt at least one of copper foil, nickel foil or a carbon-based current collector. In some embodiments, the negative active material layer may include a negative active material, a conductive agent and a binder. In some embodiments, the negative active material may include at least one of graphite or a silicon-based material. In some embodiments, the silicon-based material includes at least one of silicon, a silica material, a silicon-carbon material or a silica-carbon material. In some embodiments, the conductive agent in the negative active material layer may include at least one of conductive carbon black, Ketjen black, graphene, carbon nanotubes, or carbon fibers. In some embodiments, the binder in the negative active material layer may include at least one of sodium carboxymethyl cellulose (CMC), polyacrylate ester, polyacrylic acid, polyacrylate salt, polyvinyl pyrrolidone, polyimide, polyamideimide, polysiloxane, styrene-butadiene rubber or polyurethane resin. In some embodiments, mass ratio of the negative active material to the conductive agent to the binder in the negative active material layer may be (78 to 98.5): (0.1 to 10): (0.1 to 10). It should be understood that the foregoing is merely exemplary, and any other suitable material and mass ratio can also be adopted.

In some embodiments, the separator includes a substrate layer. The substrate layer is a non-woven fabric, a film or a composite film having a porous structure, and a material of the substrate layer is selected from at least one of polyethylene, polypropylene, polyvinylidene fluoride, polyethylene terephthalate, polyimide or aramid. For example, the polyethylene includes and is selected from at least one of high density polyethylene, low density polyethylene or ultra-high molecular weight polyethylene. Polyethylene and polypropylene, in particular, have a good effect on preventing short circuits and can improve safety of a battery through a turn-off effect. In some embodiments, a thickness of the substrate layer falls within a range of 4 μm to 20 μm.

In some embodiments, the separator may further include a heat resistance layer, and the heat resistance layer is disposed on at least one surface of the substrate layer. The heat resistance layer includes an inorganic particle and a binder. The inorganic particle includes at least one of aluminum oxide ($Al_2O_3$), silicon oxide ($SiO_2$), magnesium oxide (MgO), titanium oxide ($TiO_2$), hafnium dioxide ($HfO_2$), tin oxide ($SnO_2$), cerium dioxide ($CeO_2$), nickel oxide (NiO), zinc oxide (ZnO), calcium oxide (CaO), zirconium oxide ($ZrO_2$), yttrium oxide ($Y_2O_3$), silicon carbide (SiC), boehmite, aluminum hydroxide, magnesium hydroxide, calcium hydroxide or barium sulfate. The binder of the heat resistance layer is selected from at least one of polyvinylidene fluoride, a vinylidene fluoride-hexafluoropropylene copolymer, polyamide, polyacrylonitrile, polyacrylate ester, polyacrylic acid, polyacrylate salt, sodium carboxymethyl cellulose, polyvinylpyrrolidone, polyvinyl ether, polytetrafluoroethylene or polyhexafluoropropylene. The heat resistance layer on the surface of the substrate layer can improve heat resistance, oxidation resistance and electrolyte infiltration performance of the separator and enhance bonding performance between the separator and the electrode plates.

In some embodiments, the electrochemical apparatus may include an electrode assembly. In some embodiments, the electrode assembly is a coiled electrode assembly or a stacked electrode assembly.

In some embodiments, the electrochemical apparatus of this application includes, but is not limited to: all kinds of primary batteries, secondary batteries or capacitors. In some embodiments, the electrochemical apparatus is a lithium

secondary battery. In some embodiments, the lithium secondary battery includes, but is not limited to, a lithium metal secondary battery, a lithium-ion secondary battery, a lithium polymer secondary battery, or a lithium-ion polymer secondary battery. In some embodiments, the electrochemical apparatus is a sodium-ion battery.

This application still further provides an electronic apparatus including the electrochemical apparatus described herein.

Electronic device or apparatus of this application is not specifically limited. In some embodiments, the electrochemical equipment of this application includes, but is not limited to, a notebook computer, a pen-input computer, a mobile computer, an electronic book player, a portable phone, a portable fax machine, a portable copier, a portable printer, a headphone, a video recorder, a liquid crystal television, a hand-held cleaner, a portable CD machine, a mini disc, a transceiver, an electronic organizer, a calculator, a memory card, a portable audio recorder, a radio, a backup power supply, a motor, an automobile, a motorcycle, a power bicycle, a bicycle, a lighting appliance, a toy, a game machine, a clock, an electric tool, a flash light, a camera, a large household storage battery, a lithium-ion capacitor, etc.

A lithium-ion battery is used as an example and the preparation of the lithium-ion battery is illustrated in combination with specific embodiments. A person skilled in the art should understand that a preparation method described in this application is only an example, and any other suitable preparation methods are within the scope of this application.

## Embodiment

Performance evaluation is performed based on an embodiment and a comparative embodiment of a lithium-ion battery according to this application in the following descriptions.

### I. Preparation of lithium-ion battery

1. Preparation of positive electrode

Mixing $LiCoO_2$ as a positive active material, conductive carbon black (Super P) as a conductive agent, and polyvinylidene difluoride (PVDF) as a binder at a weight ratio of 97: 1.4: 1.6, adding the same in N-methyl-pyrrolidone (NMP), and fully stirring and mixing to obtain a uniform positive electrode slurry, where a solid content of the positive electrode slurry is 72 wt%. Then, evening coating a positive current collector aluminum foil with the positive electrode slurry, and then drying, cold-pressing, and slitting to obtain a positive electrode.

Particle sizes $Dv_{50}$ and $Dv_{10}$ of the positive active materials can be controlled by adjusting proportions of $LiCoO_2$ particles of different particle sizes. The $LiCoO_2$ particles of different particle sizes may be obtained by crushing, grading, and shaping by any means known in the art.

2. Preparation of negative electrode

Mixing artificial graphite as a negative active material, conductive carbon black (Super P) as a conductive agent, sodium carboxymethyl cellulose as a thickening agent, and styrene-butadiene rubber as a binder at a weight ratio of 96.4:1.5:0.5:1.6, adding deionized water, and stirring evenly to obtain a negative electrode slurry, where a solid content of the negative electrode slurry is 54 wt%. Coating a negative current collector copper foil with the negative electrode slurry, and then drying, cold-pressing and slitting to obtain the negative electrode.

3. Preparation of separator

Selecting a 9 μm thick polyethylene (PE) porous film as a separator substrate, coating a surface of one side of the separator substrate with a 2 μm thick heat-resistant layer (where in a heat-resistant layer slurry, based on the total mass of aluminum oxide and a binder PVDF, the mass percent of the aluminum oxide is 95%, and the mass percent of the PVDF is 5%), then coating two sides with a polyvinylidene difluoride (PVDF) slurry, and drying to obtain the separator.

4. Preparation of electrolyte solution

In a dry argon gas environment, mixing liquid components based on settings in embodiments or comparative embodiments to obtain a mixed solvent, then dissolving fully dried $LiPF_6$ in the foregoing mixed solvent, and mixing evenly to obtain an electrolyte solution. A content of each component in the electrolyte solution is a mass percent obtained through calculation based on the mass of the electrolyte solution.

5. Preparation of lithium-ion battery

Stacking the positive electrode, the separator, and the negative electrode in sequence, putting the separator between the positive electrode and the negative electrode to achieve a separation function, and winding to obtain an electrode assembly. Putting the electrode assembly into an outer aluminum-plastic film package, removing water under 80°C, injecting the foregoing electrolyte solution, sealing the package, and performing steps such as standing, chemical formation, degassing, edge trimming, shaping, and capacity testing to obtain the lithium-ion battery.

**II. Test method**

Test method for intermittent cycle performance of lithium-ion battery under a high temperature is as follows:
Placing a lithium-ion battery in a 40°C constant temperature box, charging the battery to 4.52 V at a constant current of 0.5 C, charging the battery to 0.05 C at a constant voltage of 4.52 V, and then standing for 8 hours. Then, discharging the battery to 3.0 V at a constant current of 0.5 C, then standing for 8 hours, and recording an initial discharging capacity D0 and initial resistance R0 at this time. Such a process is a charging/discharging cycle process, and a charging/discharging cycle is performed in the above manner for 200 times. Next, charging the battery at a constant current of 0.5 C to 4.5 V, charging the battery at a constant voltage of 4.5 V to 0.05 C, and standing for 8 hours. Then discharging the battery at a constant current of 0.5 C to 3.0 V and standing for 8 hours. Such a process is a charging/discharging cycle process, and a charging/discharging cycle is performed in the above manner for 200 times. Recording a remaining discharge capacity D1 after the cycle and internal resistance R1 after the cycle. Calculating a capacity retention rate and an impedance growth rate of the lithium-ion battery according to the following formulas:

$$\text{Capacity retention rate} = D1/D0 \times 100\%;$$

and

$$\text{Impedance growth rate} = (R1 - R0)/R0 \times 100\%$$

**III. Test result**

Table 1 shows effect of components and weight percentages of the components in an electrolyte solution on intermittent cycle performance of a lithium-ion battery at a high temperature. In addition to the components listed in Table 1, the electrolyte solution further contains a specific amount of $LiPF_6$, so that a sum of weight percentages of components in the electrolyte solution is 100%.

Table 1

| Embodiments | Compound of Formula I | | Compound of Formula II | | a/b | a+b (wt%) | Other components | | 400 intermittent cycles at 40 °C | |
|---|---|---|---|---|---|---|---|---|---|---|
| | Compound | Weight percentage a (wt%) | Compound | Weight percentage b (wt%) | | | Compound | Weight percentage (wt%) | Capacity retention rate (%) | Impedance growth rate (%) |
| Embodiment 1-1 | I-2 | 40 | II-1 | 8 | 5 | 48 | EC+ PC | 19.5+ 20 | 62.6 | 77.8 |
| Embodiment 1-2 | I-5 | 40 | II-1 | 8 | 5 | 48 | EC+ PC | 19.5+ 20 | 65.5 | 61.1 |
| Embodiment 1-3 | I-11 | 40 | II-1 | 8 | 5 | 48 | EC+ PC | 19.5+ 20 | 64.7 | 65.3 |
| Embodiment 1-4 | I-17 | 40 | II-1 | 8 | 5 | 48 | EC+ PC | 19.5+ 20 | 62.2 | 79.2 |
| Embodiment 1-5 | I-20 | 40 | II-1 | 8 | 5 | 48 | EC+ PC | 19.5+ 20 | 61.7 | 71.2 |
| Embodiment 1-6 | I-11 | 10 | II-1 | 5 | 2 | 15 | EC+ PC+ DEC | 19.5+ 20+ 33 | 42.3 | 154.6 |
| Embodiment 1-7 | I-11 | 10 | II-1 | 8 | 1.25 | 18 | EC+ PC+ DEC | 19.5+ 20+ 30 | 49 | 89.6 |
| Embodiment 1-8 | I-11 | 22 | II-1 | 8 | 2.05 | 30 | EC+ PC+ DEC | 19.5+ 20+ 18 | 53.5 | 81.1 |
| Embodiment 1-9 | I-11 | 30 | II-1 | 8 | 3.75 | 38 | EC+ PC+ DEC | 19.5+ 20+ 10 | 65.5 | 67.3 |
| Embodiment 1-10 | I-11 | 45 | II-1 | 8 | 5.625 | 53 | EC+ PC | 19.5+ 15 | 66.1 | 61.6 |
| Embodiment 1-11 | I-11 | 63 | II-1 | 8 | 7.875 | 71 | PC | 16.5 | 68.7 | 54.5 |
| Embodiment 1-12 | I-11 | 73 | II-1 | 8 | 9.125 | 81 | PC | 6.5 | 66.7 | 60.5 |
| Embodiment 1-13 | I-11 I-10 | 50 30 | II-1 | 7.5 | 10.67 | 87.5 | / | / | 58.4 | 78.4 |
| Embodiment 1-14 | I-11 | 63 | II-1 | 5 | 12.6 | 68 | PC | 19.5 | 64.8 | 59.2 |
| Embodiment 1-15 | I-11 I-10 | 50 30 | II-1 | 5 | 16 | 85 | PC | 2.5 | 51.4 | 103.4 |
| Embodiment 1-16 | I-11 I-10 | 50 35 | II-1 | 5 | 17 | 90 | / | / | 42.3 | 157.9 |

(continued)

| Embodiments | Compound of Formula I | | Compound of Formula II | | a/b | a+b (wt%) | Other components | | 400 intermittent cycles at 40 °C | |
|---|---|---|---|---|---|---|---|---|---|---|
| | Compound | Weight percentage a (wt%) | Compound | Weight percentage b (wt%) | | | Compound | Weight percentage (wt%) | Capacity retention rate (%) | Impedance growth rate (%) |
| Embodiment 1-17 | I-11 | 63 | II-1 | 10 | 6.3 | 73 | PC | 14.5 | 67.2 | 50.5 |
| Embodiment 1-18 | I-11 | 63 | II-1 | 15 | 4.2 | 78 | PC | 9.5 | 66.9 | 59.7 |
| Embodiment 1-19 | I-11 | 62.5 | II-1 II-6 | 15 10 | 2.5 | 87.5 | / | / | 58.4 | 76.5 |
| Embodiment 1-20 | I-11 | 63 | II-2 | 8 | 7.875 | 71 | PC | 16.5 | 64.9 | 56.9 |
| Embodiment 1-21 | I-11 | 63 | II-3 | 8 | 7.875 | 71 | PC | 16.5 | 65.7 | 59.5 |
| Embodiment 1-22 | I-11 | 63 | II-6 | 8 | 7.875 | 71 | PC | 19.5 | 64.8 | 57.2 |
| Comparative Embodiment 1 | / | / | II-1 | 5 | / | / | EC+ PC+ DEC | 15+ 15+ 52.5 | 33.5 | 230 |
| Comparative Embodiment 2 | I-18 | 87.5 | / | / | / | / | / | / | 30.2 | 221 |

"/" means the item is not added or does not exist.

The results show that when the electrolyte solution includes the compound of Formula I and the compound of Formula II that has Formula II, an energy retention rate of the lithium-ion battery at the high temperature can be significantly improved and an impedance growth rate of the lithium-ion battery can be significantly reduced, thereby significantly improving the intermittent cycle performance of the lithium-ion battery at the high temperature.

When the weight percentage of the compound of Formula I in the electrolyte solution is 10% to 80%, especially 40% to 73%, the intermittent cycle performance of the lithium-ion battery at the high temperature can be further improved.

When the weight percentage a of the compound of Formula I and the weight percentage b of the compound of Formula II in the electrolyte solution satisfy that a/b is 1.2 to 16 and/or a+b is 18% to 87.5% (especially 48% to 81%), the intermittent cycle performance of the lithium-ion battery at the high temperature can be further improved.

Table 2 shows effect of addition of a first nitrile compound to an electrolyte solution on intermittent cycle performance of a lithium-ion battery at a high temperature. Except for parameters listed in Table 2, Embodiments 2-1 to 2-8 have the same settings as Embodiment 1-11, and Embodiments 2-9 and 2-10 have the same settings as Embodiment 1-7.

Table 2

| Embodiments | First nitrile compound | | a/c | Other components | | 400 intermittent cycles at 40 °C | |
|---|---|---|---|---|---|---|---|
| | Compound | Weight percentage c (wt%) | | Compound | Weight percentage (wt%) | Capacity retention rate (%) | Impedance growth rate (%) |
| Embodiment 1-11 | / | / | / | PC | 16.5 | 68.7 | 54.5 |
| Embodiment 2-1 | Succinonitrile | 0.9 | 70 | PC | 15.6 | 68.8 | 51.2 |
| Embodiment 2-2 | Adipic dinitrile | 2 | 31.5 | EC+ PC | 10+4.5 | 69.6 | 48.5 |
| Embodiment 2-3 | Suberonitrile | 2.3 | 27.4 | PC | 14.2 | 69.9 | 50.2 |
| Embodiment 2-4 | Succinonitrile+ Adipic dinitrile | 2.9+1.9 | 13.1 | EC+ PC | 5+6.7 | 70.5 | 49.7 |
| Embodiment 2-5 | Succinonitrile | 0.8 | 78.8 | EC+ PC | 10+5.7 | 68.5 | 55.1 |
| Embodiment 2-6 | Heptanedinitrile,4-(2-cvanoethyl)- | 2.3 | 26.1 | PC | 14.2 | 70.3 | 48.5 |
| Embodiment 2-7 | 2-pentenedinitrile | 1.1 | 57 | PC | 15.4 | 69.9 | 50.5 |
| Embodiment 2-8 | Adipic dinitrile+ Ethylene glycol bis(propionitrile) ether | 2.1+1.1 | 19.7 | EC+ PC | 13.2 | 70.8 | 48.3 |
| Embodiment 1-7 | / | / | / | EC+ PC+ DEC | 19.5+ 20+ 30 | 49 | 89.6 |
| Embodiment 2-9 | Adipic dinitrile | 2 | 5 | EC+ PC+ DEC | 19.5+ 20+ 28 | 54.7 | 76.3 |
| Embodiment 2-10 | Adipic dinitrile | 3 | 3.3 | EC+ PC+ DEC | 19.5+ 20+ 27 | 48.5 | 90.8 |
| "/" means the item is not added or does not exist. | | | | | | | |

The results show that when the electrolyte solution further includes the first nitrile compound (at least one of succinonitrile, glutaronitrile, adiponitrile, pimelic dinitrile, suberonitrile, or 2-methylglutaronitrile), this helps further improve the intermittent cycle performance of the lithium-ion battery at the high temperature.

When a ratio of the weight percentage of the compound of Formula I to the weight percentage of the first nitrile compound in the electrolyte solution ranges from 5 to 70, especially ranges from 13.1 to 31.5, this helps further improve the

intermittent cycle performance of the lithium-ion battery at the high temperature.

Table 3 shows effect of a ratio of a weight percentage of a compound of Formula II to a weight percentage of a compound III-5 on intermittent cycle performance of a lithium-ion battery at a high temperature. Except for parameters listed in Table 3, Embodiments 3-1 to 3-9 have the same settings as Embodiment 1-11, Embodiments 3-10 to 3-11 have the same settings as Embodiment 2-1, Embodiments 3-12 to 3-13 have the same settings as Embodiment 2-2, and Embodiments 3-14 to 3-15 have the same settings as Embodiment 2-4.

Table 3

| | Compound of Formula II | | Second nitrile compound | | Ratio of the weight percentage of the compound of Formula II to the weight percentage of the compound III-5 | Other components | | 400 intermittent cycles at 40 °C | |
|---|---|---|---|---|---|---|---|---|---|
| | Compound | Weight percentage b (wt%) | Compound | Weight percentage d (wt%) | | Compound | Weight percentage (wt%) | Capacity retention rate (%) | Impedance growth rate (%) |
| Embodiment 1-11 | II-1 | 8 | / | / | / | PC | 16.5 | 68.7 | 54.5 |
| Embodiment 3-1 | II-1 | 8 | III-11 | 1 | / | PC | 15.5 | 71.7 | 51.4 |
| Embodiment 3-2 | II-1 | 8 | III-13 | 1 | / | PC | 15.5 | 70.9 | 53.1 |
| Embodiment 3-3 | II-I | 8 | III-5 | 1.1 | 7.27 | EC+PC | 10+5.4 | 71.5 | 51.7 |
| Embodiment 3-4 | II-1 | 8 | III-11+ III-5 | 1.8+2 | 4 | PC | 12.7 | 71.8 | 51.0 |
| Embodiment 3-5 | II-1 | 8 | III-11+ III-5+ III-13 | 2+2+2 | 4 | EC+PC | 4+6.5 | 70.1 | 52.9 |
| Embodiment 3-6 | III-1 | 5 | III-5 | 2 | 2.5 | PC | 15.5 | 71.7 | 50.2 |
| Embodiment 3-7 | II-1 | 20 | III-5 | 1 | 20 | PC | 3.5 | 71.1 | 49.6 |
| Embodiment 3-8 | II-1 | 5 | III-5 | 2.5 | 2 | PC | 17 | 67.1 | 58.2 |
| Embodiment 3-9 | II-1 | 20 | III-5 | 0.8 | 25 | PC | 3.7 | 67.9 | 55.8 |
| Embodiment 2-1 | II-1 | 8 | / | / | / | PC | 15.6 | 68.8 | 51.2 |
| Embodiment 3-10 | II-1 | 8 | III-5 | 2 | 4 | EC+PC | 13.6 | 71.9 | 49.8 |
| Embodiment 3-11 | II-1 | 15 | III-5 | 2.5 | 6 | EC+PC | 6.1 | 72.0 | 49.6 |
| Embodiment 2-2 | II-1 | 8 | / | / | / | EC+PC | 10+4.5 | 69.6 | 48.5 |
| Embodiment 3-12 | II-1 | 10 | III-5 | 2 | 5 | EC+PC | 6+4.5 | 71.8 | 49.7 |
| Embodiment 3-13 | II-1 | 8 | III-5 | 0.8 | 10 | EC+PC | 9.2+4.5 | 71.1 | 49.2 |
| Embodiment 2-4 | III-1 | 8 | / | / | / | EC+PC | 5+6.7 | 70.5 | 49.7 |
| Embodiment 3-14 | II-1 | 12 | III-5 | 1 | 12 | EC+PC | 2+4.7 | 71.2 | 49.3 |

(continued)

| | Compound of Formula II | | Second nitrile compound | | Ratio of the weight percentage of the compound of Formula II to the weight percentage of the compound III-5 | Other components | | 400 intermittent cycles at 40 °C | |
|---|---|---|---|---|---|---|---|---|---|
| | Compound | Weight percentage b (wt%) | Compound | Weight percentage d (wt%) | | Compound | Weight percentage (wt%) | Capacity retention rate (%) | Impedance growth rate (%) |
| Embodiment 3-15 | II-1 | 15 | III-5 | 1 | 15 | PC | 3.7 | 71.0 | 49.6 |

"/" means the item is not added or does not exist.

The results show that when the electrolyte solution further includes the second nitrile compound (at least one of compound III-1 to compound III-19), this helps further improve the intermittent cycle performance of the lithium-ion battery at the high temperature.

When the electrolyte solution includes the compound III-5 and the ratio of the weight percentage of the compound of Formula II to the weight percentage of the compound III-5 in the electrolyte solution ranges from 2.5 to 20, this helps further improve the intermittent cycle performance of the lithium-ion battery at the high temperature.

Table 4 shows effect of a particle size of a positive active material on intermittent cycle performance of a lithium-ion battery at a high temperature. Except for parameters listed in Table 4, Embodiments 4-1 to 4-5 have the same settings as Embodiment 1-9, Embodiments 4-8 to 4-9 have the same settings as Embodiment 2-1, and Embodiments 4-10 and 4-11 have the same settings as Embodiment 3-13.

Table 4

| | $Dv_{10}$ (nm) | $Dv_{50}$ (nm) | 400 intermittent cycles at 40 °C | |
|---|---|---|---|---|
| | | | Capacity retention rate (%) | Impedance growth rate (%) |
| Embodiment 1-9 | 4 | 12 | 68.7 | 54.5 |
| Embodiment 4-1 | 2 | 10 | 68.9 | 54.1 |
| Embodiment 4-2 | 4 | 18 | 69.2 | 52.1 |
| Embodiment 4-3 | 4 | 25 | 68.6 | 55.7 |
| Embodiment 4-4 | 10 | 18 | 67.5 | 56.1 |
| Embodiment 4-5 | 12 | 26 | 56.1 | 69.2 |
| Embodiment 4-6 | 6.2 | 16.1 | 69.4 | 51.6 |
| Embodiment 4-7 | 3.2 | 13.1 | 69.5 | 51.7 |
| Embodiment 2-1 | 4 | 12 | 68.8 | 51.2 |
| Embodiment 4-8 | 6.2 | 16.1 | 70.3 | 50.5 |
| Embodiment 4-9 | 3.2 | 13.1 | 70.2 | 50.7 |
| Embodiment 3-13 | 4 | 12 | 71.1 | 49.2 |
| Embodiment 4-10 | 6.2 | 16.1 | 71.5 | 48.6 |
| Embodiment 4-11 | 3.2 | 13.1 | 71.4 | 48.9 |

The results show that when the particle size of the positive active material satisfies that $Dv_{50}$ is 10 μm to 25 μm and $Dv_{10}$ is 2 μm to 10 μm, this helps further improve the intermittent cycle performance of the lithium-ion battery at the high temperature.

Throughout the description, references to "embodiments", "part of embodiments", "one embodiment", "another example", "an example", "a specific example", or "a partial example" are meant to imply that at least one of the embodiments or examples in this application includes a particular feature, structure, material, or characteristic described in that embodiment or example. Thus, the descriptions that appear at various points throughout the description, for example: "in some embodiments", "in embodiments", "in an embodiment", "in another example", "in an example", "in a particular example", or "an example" are not necessarily references to the same embodiments or examples in this application. In addition, the particular features, structures, materials, or characteristics herein may be combined in one or more embodiments or examples in any suitable manner.

Although the illustrative embodiments have been demonstrated and described, a person skilled in the art should understand that the above embodiments are not to be construed as a limitation of this application, and embodiments may be altered, substituted, and modified without departing from the spirit, principles, and scope of this application.

## Claims

1. An electrochemical apparatus, comprising a positive electrode, a negative electrode, a separator, and an electrolyte solution; **characterized in that**, the electrolyte solution comprises a compound of Formula I and a compound of Formula II, wherein

the compound of Formula I is

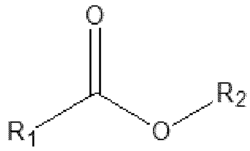

,

wherein $R_1$ is halogenated $C_1$ to $C_{10}$ alkyl, and $R_2$ is $C_1$ to $C_{10}$ alkyl; and the compound of Formula II is:

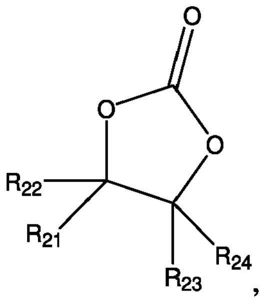

,

wherein $R_{21}$, $R_{22}$, $R_{23}$ and $R_{24}$ are each independently fluorine, or unsubstituted or halogenated $C_1$ to $C_3$ alkyl, and at least one of $R_{21}$, $R_{22}$, $R_{23}$ and $R_{24}$ comprises fluorine.

2. The electrochemical apparatus according to claim 1, **characterized in that**, the compound of Formula I is at least one selected from the following compounds:

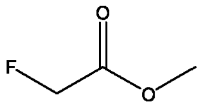 I-1, 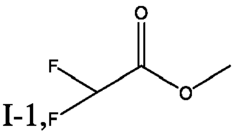 I-2, 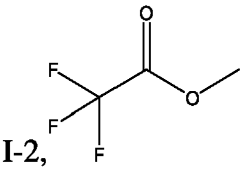 I-3,

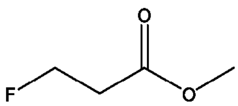 I-4, 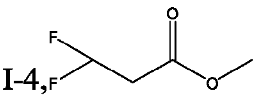 I-5, 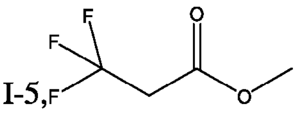 I-6,

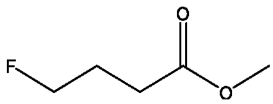 I-7, 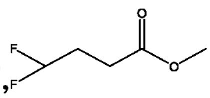 I-8, 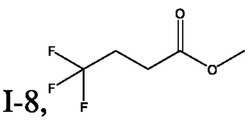 I-9,

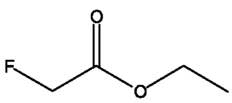 I-10, 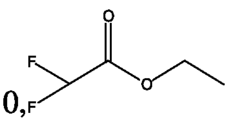 I-11, 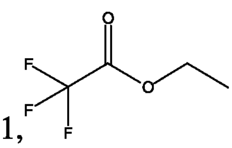 I-12,

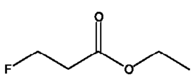 I-13, 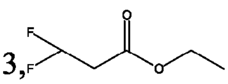 I-14, 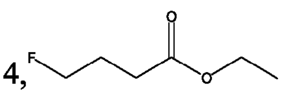 I-15,

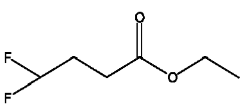 I-16, 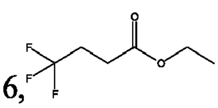 I-17, 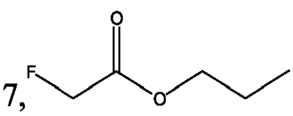 I-18,

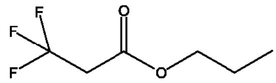 I-19, 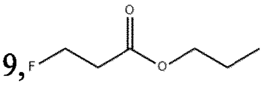 I-20,

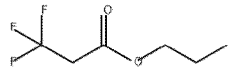 I-21, or 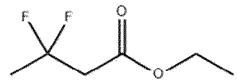 I-22.

**3.** The electrochemical apparatus according to claim 1 or 2, **characterized in that**, based on a mass of the electrolyte solution, a weight percentage of the compound of Formula I ranges from 10% to 80%.

**4.** The electrochemical apparatus according to any one of claims 1 to 3, **characterized in that**, the compound of Formula II is at least one selected from the following compounds:

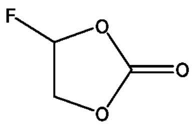 II-1, 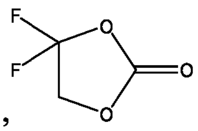 II-2, 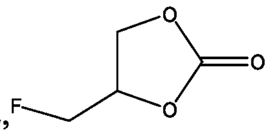 II-3,

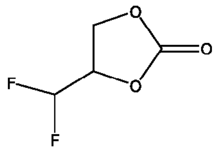 II-4, 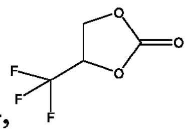 II-5, 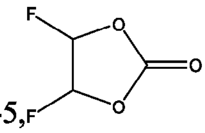 II-6,

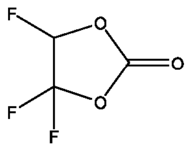 II-7, 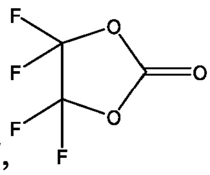 II-8, 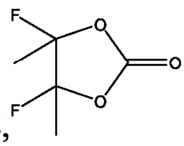 II-9,

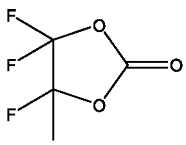 II-10, 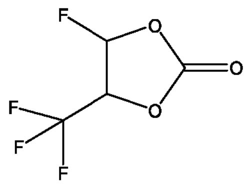 II-11, or 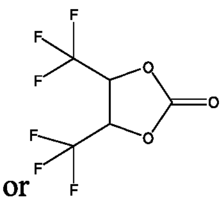 II-12.

**5.** The electrochemical apparatus according to any one of claims 1 to 4, **characterized in that**, based on a mass of the electrolyte solution, a weight percentage of the compound of Formula II ranges from 5% to 25%.

**6.** The electrochemical apparatus according to any one of claims 1 to 5, **characterized in that**, based on a mass of the electrolyte solution, a ratio of a weight percentage of the compound of Formula I to a weight percentage of the compound of Formula II ranges from 2.05 to 16.

**7.** The electrochemical apparatus according to any one of claims 1 to 6, **characterized in that**, based on a mass of the electrolyte solution, a sum of a weight percentage of the compound of Formula I and a weight percentage of the compound of Formula II ranges from 18% to 87.5%.

**8.** The electrochemical apparatus according to any one of claims 1 to 7, **characterized in that**, the electrolyte solution comprises a first nitrile compound; wherein the first nitrile compound comprises at least one selected from the group consisting of succinonitrile, glutaronitrile, adiponitrile, pimelic dinitrile, suberonitrile, 2-pentenenitrile, 1,4-dicyano-2-butene, and ethylene glycol bis(propionitrile) ether.

**9.** The electrochemical apparatus according to claim 8, **characterized in that**, based on a mass of the electrolyte

solution, a weight percentage of the first nitrile compound ranges from 0.8 to 4.8.

**10.** The electrochemical apparatus according to claim 8 or 9, **characterized in that**, based on a mass of the electrolyte solution, a ratio of a weight percentage of the compound of Formula I to a weight percentage of the first nitrile compound ranges from 5 to 70.

**11.** The electrochemical apparatus according to any one of claims 1 to 10, **characterized in that**, the electrolyte solution comprises a second nitrile compound; wherein the second nitrile compound is at least one selected from the following compounds:

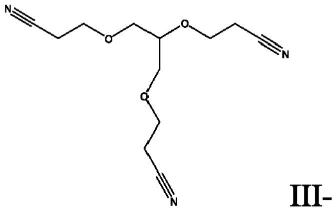
III-1,
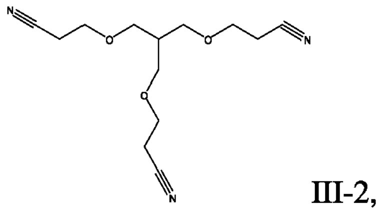
III-2,
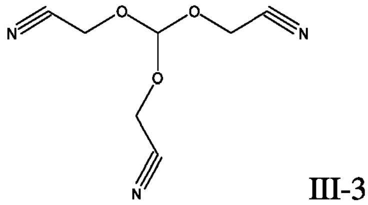
III-3,
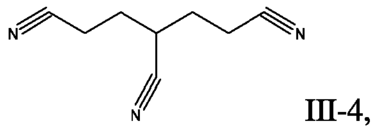
III-4,
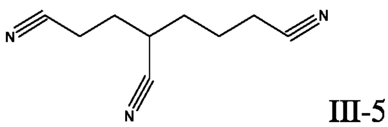
III-5,
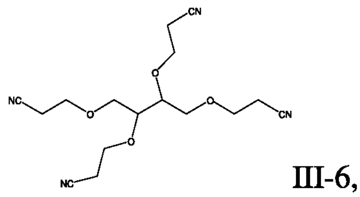
III-6,
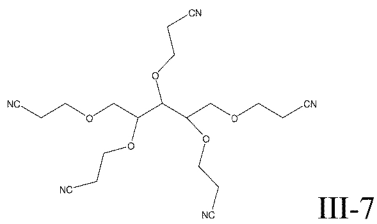
III-7,
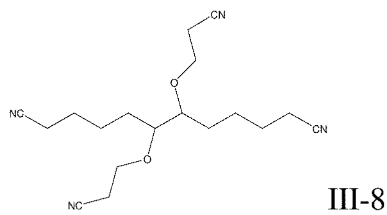
III-8,
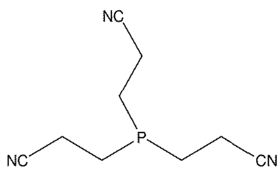
III-9,
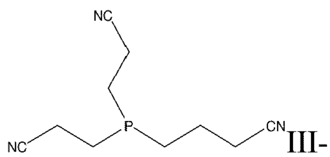
III-10,
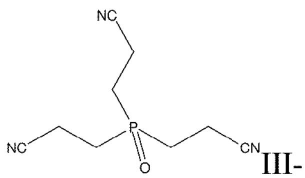
III-11,
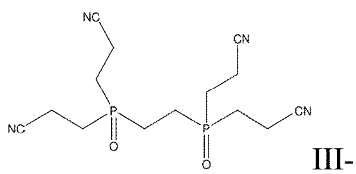
III-12,

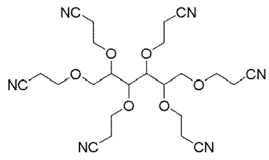 III-13, 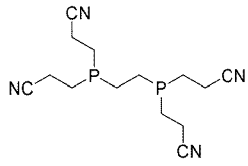 III-14,

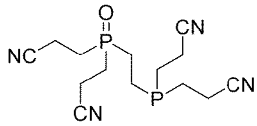 III-15, 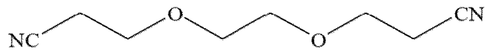 III-16,

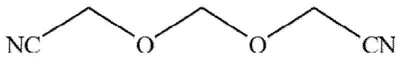 III-17, 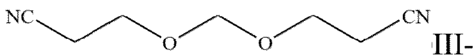 III-18,

or

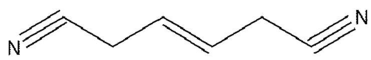 III-19.

**12.** The electrochemical apparatus according to claim 11, **characterized in that**, based on the mass of the electrolyte solution, a weight percentage of the second nitrile compound ranges from 0.8% to 6%.

**13.** The electrochemical apparatus according to any one of claims 1 to 12, **characterized in that**, wherein the electrolyte solution comprises a compound III-5, wherein the compound III-5 is

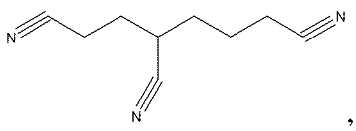 ,

and

based on a mass of the electrolyte solution, a ratio of a weight percentage of the compound of Formula II to a weight percentage of the compound III-5 ranges from 2.5 to 20.

**14.** The electrochemical apparatus according to any one of claims 1 to 13, wherein the positive active material comprises lithium cobalt oxide; wherein a particle size of the positive active material satisfies: $Dv_{50}$ ranges from 10 μm to 25 μm and $Dv_{10}$ ranges from 2 μm to 10 μm.

**15.** An electronic apparatus, wherein the electronic apparatus comprises the electrochemical apparatus according to any one of claims 1 to 14.